# EUROPEAN PATENT APPLICATION

(11) **EP 4 633 060 A1**
(43) Date of publication of application: **15.10.2025**
(21) Application number: 23922341.5
(22) Date of filing: 25.10.2023
(51) Int. Cl.: H04B 10/071, H04B 10/079

(54) **OPTICAL PULSE GENERATION DEVICE AND DETECTION SYSTEM**

(30) Priority: 14.02.2023 CN 202310149401
(71) Applicant: Huawei Technologies Co., Ltd., Shenzhen, Guangdong 518129 (CN)
(72) Inventor: FU, Xin, Shenzhen, Guangdong 518129 (CN); XING, Chen, Shenzhen, Guangdong 518129 (CN); LEI, Hao, Shenzhen, Guangdong 518129 (CN)
(74) Representative: Maiwald GmbH
(86) International application number: PCT/CN2023/126356
(87) International publication number: WO 2024/169224

(57) **Abstract**

This application discloses an optical pulse generation apparatus and a detection system, used in the communication field. The apparatus includes a frequency shift unit, a modulation unit, a first circuit, a second circuit, and a main control unit. The frequency shift unit receives an optical signal of a beam transmitted by a light source. The main control unit respectively sends a first signal and a second signal to the first circuit and the second circuit, where the first signal indicates to perform a frequency shift on the optical signal, and the second signal indicates to generate a target optical pulse used to detect an optical fiber. The first circuit sends a frequency shift signal to the frequency shift unit based on the first signal. The second circuit sends a modulation signal to the modulation unit based on the second signal. Based on the frequency shift signal, the frequency shift unit performs a first frequency shift on the optical signal at a high level moment of the target optical pulse, and performs a second frequency shift on the optical signal at a low level moment of the target optical pulse, to obtain a frequency-shifted optical signal. The modulation unit modulates the frequency-shifted optical signal based on the modulation signal to obtain the target optical pulse. This can meet requirements such as ER, pulse width, and frequency shift flexibility.

## Description

This application claims priority to Chinese Patent Application No. 202310149401.2, filed with the China National Intellectual Property Administration on February 14, 2023 and entitled "OPTICAL PULSE GENERATION APPARATUS AND DETECTION SYSTEM", which is incorporated herein by reference in its entirety.

### TECHNICAL FIELD

Embodiments of this application relate to the communication field, and in particular, to an optical pulse generation apparatus and a detection system.

### BACKGROUND

Currently, there is an extremely high requirement for long-distance distributed sensing in scenarios such as oil and gas, electricity, mines, parks, and national border security. An optical fiber has become an ideal choice for a distributed sensor because of being light, passive, and easy to transmit a sensing signal, and other advantages. An optical pulse signal may be applied to a distributed optical fiber sensing system, to implement distributed parameter sensing on an optical fiber link. A frequency shift on the optical pulse signal can reduce noise in a low frequency band, and improve a signal-to-noise ratio (signal-to-noise ratio, SNR) of the system.

Two solutions are mainly used in the industry to implement a frequency shift on an optical pulse signal. In one solution, an acousto-optic modulator (acousto-optic modulator, AOM) is used to complete frequency shifts and pulse modulation on continuous optical signals. However, during optical pulse modulation, a pulse rising edge is limited by time at which the AOM establishes a sound field, and it is difficult to generate a narrow pulse signal whose width is less than 20 nanoseconds. In addition, the AOM is not flexible enough during optical frequency shift modulation, and it is difficult to implement frequency modulation. In the other solution, an electro-optic modulator (electro-optic modulator, EOM) is used to complete frequency shifts and pulse modulation on continuous optical signals. However, the EOM has relatively poor extinction ratio (extinction ratio, ER) performance during pulse modulation, and it is difficult to output an optical pulse whose ER is greater than 30 decibels (dB). In addition, when the solution is applied to the distributed optical fiber sensing system, an SNR and a detection distance of the system are limited. Therefore, when a frequency shift and pulse modulation of an optical signal are implemented in the current solutions, it is difficult to meet optical pulse output requirements in different aspects such as ER, pulse width, and frequency shift flexibility.

### SUMMARY

This application provides an optical pulse generation apparatus and a detection system, used in the long-distance distributed sensing field, to meet optical pulse output requirements in different aspects such as ER, pulse width, and frequency shift flexibility.

According to a first aspect, an optical pulse generation apparatus is provided. The optical pulse generation apparatus includes a frequency shift unit, a modulation unit, a first circuit, a second circuit, and a main control unit.

The frequency shift unit is configured to receive an optical signal of a beam transmitted by a light source.

The main control unit is configured to respectively send a first signal and a second signal to the first circuit and the second circuit, where the first signal indicates to perform a frequency shift on the optical signal, the second signal indicates to generate a target optical pulse, and the target optical pulse is used to detect an optical fiber.

The first circuit is configured to send a frequency shift signal to the frequency shift unit based on the first signal.

The second circuit is configured to send a modulation signal to the modulation unit based on the second signal.

The frequency shift unit is further configured to: based on the frequency shift signal, perform a first frequency shift on the optical signal at a high level moment of the target optical pulse, and perform a second frequency shift on the optical signal at a low level moment of the target optical pulse, to obtain a frequency-shifted optical signal.

The modulation unit is configured to modulate the frequency-shifted optical signal based on the modulation signal to obtain the target optical pulse.

In the implementation of this application, the frequency shift unit and the modulation unit respectively implement frequency shift modulation and pulse modulation. The frequency shift unit can implement flexible frequency modulation, including flexible frequency and phase modulation, and can implement a single/double sideband and different modulation formats. Furthermore, the first frequency shift and the second frequency shift are respectively performed on the optical signal at the high level moment and the low level moment of the target optical pulse to implement frequency shift modulation of different frequencies, thereby improving an in-band equivalent ER. In addition, the modulation unit can implement a high ER and narrow pulse modulation. This can meet optical pulse output requirements in different aspects such as ER, pulse width, and frequency shift flexibility.

In a possible implementation of the first aspect, the main control unit is further configured to perform timing control on the first circuit and the second circuit.

In the implementation of this application, an implementation in which different frequency shift frequencies are implemented at the high level moment and the low level moment of the target optical pulse is described, thereby reflecting reliability of the solution.

In a possible implementation of the first aspect, the first frequency shift is different from the second frequency shift.

In the implementation of this application, the first frequency shift is different from the second frequency shift. In this way, an in-band equivalent ER is improved, so that an ultra-high ER greater than 70 dB can be implemented to a specific extent.

In a possible implementation of the first aspect, the modulation signal is a pulse signal with a repetition frequency.

In the implementation of this application, the modulation signal is the pulse signal with the repetition frequency, so that an implementation form of the modulation signal is specifically described, thereby improving reliability of the solution.

In a possible implementation of the first aspect, the frequency shift unit is any one of the following:
an in-phase/quadrature modulator, an acousto-optic modulator, or an electro-optic modulator.

In the implementation of this application, a plurality of types of frequency shift units are listed, thereby increasing selectivity and diversity of the solution.

In a possible implementation of the first aspect, the modulation unit is a semiconductor optical amplifier.

In the implementation of this application, a specific implementation of the modulation unit is listed, thereby reflecting reliability of the solution.

According to a second aspect, a detection system is provided. The detection system includes a light source, an optical pulse generation apparatus, a circulator, a receiver, and an optical fiber. The optical pulse generation apparatus includes a frequency shift unit, a modulation unit, a first circuit, a second circuit, and a main control unit.

The light source is configured to send a beam.

The frequency shift unit is configured to receive an optical signal of the beam transmitted by the light source.

The main control unit is configured to respectively send a first signal and a second signal to the first circuit and the second circuit, where the first signal indicates to perform a frequency shift on the optical signal, the second signal indicates to generate a target optical pulse, and the target optical pulse is used to detect an optical fiber.

The first circuit is configured to send a frequency shift signal to the frequency shift unit based on the first signal.

The second circuit is configured to send a modulation signal to the modulation unit based on the second signal.

The frequency shift unit is further configured to: based on the frequency shift signal, perform a first frequency shift on the optical signal at a high level moment of the target optical pulse, and perform a second frequency shift on the optical signal at a low level moment of the target optical pulse, to obtain a frequency-shifted optical signal.

The modulation unit is configured to modulate the frequency-shifted optical signal based on the modulation signal to obtain the target optical pulse.

In addition, the modulation unit is further configured to send the target optical pulse to the optical fiber through the circulator.

The circulator is configured to: obtain backscattered light of the target optical pulse in the optical fiber, and send the backscattered light to the receiver.

The receiver performs distributed detection based on the backscattered light.

In the implementation of this application, the detection system can increase detection sensitivity based on the optical pulse generation apparatus, so that a weaker signal can be detected. In addition, the detection system can meet optical pulse output requirements in different aspects such as ER, pulse width, and frequency shift flexibility, thereby further improving detection sensitivity.

In a possible implementation of the second aspect, the main control unit is further configured to perform timing control on the first circuit and the second circuit.

In a possible implementation of the second aspect, the detection system further includes at least one optical amplifier, and the optical amplifier is configured to transmit the target optical pulse or the backscattered light.

In a possible implementation of the second aspect, the first frequency shift is different from the second frequency shift.

In a possible implementation of the second aspect, the modulation signal is a pulse signal with a repetition frequency.

In a possible implementation of the second aspect, the frequency shift unit is any one of the following:
an in-phase/quadrature modulator, an acousto-optic modulator, or an electro-optic modulator.

In a possible implementation of the second aspect, the modulation unit is a semiconductor optical amplifier.

For beneficial effects of the second aspect, refer to those of the first aspect. Details are not described herein again.

### BRIEF DESCRIPTION OF DRAWINGS

FIG. 1 is a diagram of an architecture of a common distributed optical fiber transmission system;
FIG. 2 is a diagram of a structure of an optical pulse generation apparatus according to an embodiment of this application;
FIG. 3 is a diagram of receiving a beam transmitted by a light source according to an embodiment of this application;
FIG. 4 is a diagram of modulation of different frequency shift frequencies according to an embodiment of this application;
FIG. 5 is a diagram of a structure of a detection system according to an embodiment of this application;
FIG. 6 is a diagram of an architecture of high-sensitivity distributed optical fiber strain detection according to an embodiment of this application;
FIG. 7 is a diagram of a result of high-sensitivity distributed optical fiber strain detection according to an embodiment of this application; and
FIG. 8 is another diagram of a result of high-sensitivity distributed optical fiber strain detection according to an embodiment of this application.

### DESCRIPTION OF EMBODIMENTS

Embodiments of this application provide an optical pulse generation apparatus and a detection system, used in the long-distance distributed sensing field, to meet requirements in different aspects such as ER, pulse width, and frequency shift flexibility.

In the specification, claims, and accompanying drawings of this application, the terms such as "first" and "second" are intended to distinguish between similar objects but are not necessarily intended to describe a specific order or sequence. It should be understood that the terms used in such a way are interchangeable in proper cases, and this is merely a distinguishing manner used when objects with a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units not expressly listed or inherent to such a process, method, product, or device.

Before embodiments of this application are described, for ease of subsequently understanding embodiments of this application, a common distributed optical fiber sensing system is first briefly described.

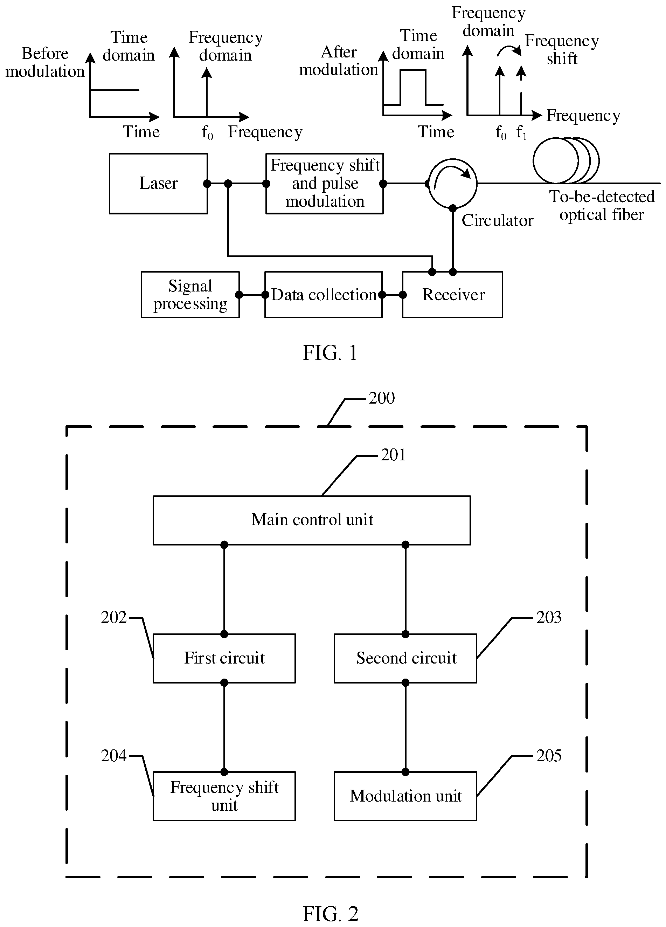

For ease of understanding, the following provides descriptions with reference to FIG. 1. FIG. 1 is a diagram of an architecture of a common distributed optical fiber transmission system. A detection optical pulse is formed after a beam sent by a laser undergoes a frequency shift and pulse modulation. As shown in FIG. 1, an optical pulse obtained after a frequency shift from a frequency f0 to f1 is obtained after a frequency shift and modulation are performed on an optical signal existing before modulation, and then the optical pulse is injected into a to-be-detected optical fiber. Backscattered light in the to-be-detected optical fiber is obtained through a receiver, data collection is performed on the backscattered light, and information such as stress, strain, temperature, reflection, or a loss on a to-be-detected link is restored by using a signal processing algorithm.

The distributed optical fiber sensing system may be used in various application scenarios. For example, in a distributed optical fiber sound wave sensing technology, an echo signal of a detection optical pulse in an optical fiber is analyzed to implement distributed sound/vibration signal detection. The technology may be applied to anti-intrusion scenarios such as buried pipelines, parks/border and coastal defense perimeters, and submarine cables, and a vibration signal caused by an intrusion event is detected to implement an intrusion event warning. The technology may also be applied to an underground exploration scenario, and distributed detection is performed on an underground vibration wave generated by an active excitation source, so that component and structure information at different underground depths can be extracted, to provide guidance information for underground mining, or the like.

A current implementation solution corresponding to a requirement of a frequency shift on an optical pulse signal in the distributed optical fiber sensing system is first briefly described.

Currently, two solutions are mainly used in the industry. In one technical solution, an AOM is used to complete frequency shifts and pulse modulation on continuous optical signals. This technical solution is implemented by using a diffraction effect of a refractive index grating in an acousto-optic crystal for incident light. Specifically, when the AOM performs optical pulse modulation, a pulse rising edge is limited by establishment time of a sound field in the acousto-optic crystal, and it is difficult to generate a narrow pulse signal whose width is less than 20 nanoseconds. Furthermore, performance of the pulse rising edge can be ensured only at a relatively high operating frequency. Therefore, a relatively high requirement is imposed on a sampling rate of a system receive end, and consequently an amount of data is relatively large and burden of data processing is increased. In addition, there are other problems, for example, modulation is not flexible enough when the AOM performs a frequency shift on an optical signal, and it is difficult to implement frequency modulation.

In the other technical solution, an EOM is used to complete frequency shifts and modulation on continuous optical signals. This technical solution is implemented by using an electro-optic effect of a crystal material, and can implement a flexible frequency shift frequency and select narrow pulse output. However, ER performance is relatively poor during pulse modulation, and it is difficult to output an optical pulse whose ER is greater than 30 dB. When the solution is applied to the distributed optical fiber sensing system, an SNR and a detection distance of the system are limited.

Therefore, it can be learned that, when a frequency shift and pulse modulation of an optical signal are implemented in the current implementation solutions, it is difficult to meet optical pulse output requirements in different aspects such as ER, pulse width, and frequency shift flexibility.

To resolve the foregoing problem, embodiments of this application provide an optical pulse generation apparatus and a detection system, used in the communication field. The pulse generation apparatus includes a frequency shift unit, a modulation unit, a first circuit, a second circuit, and a main control unit. The frequency shift unit is configured to receive an optical signal of a beam transmitted by a light source. The main control unit is configured to respectively send a first signal and a second signal to the first circuit and the second circuit, where the first signal indicates to perform a frequency shift on the optical signal, the second signal indicates to generate a target optical pulse from the optical signal, and the target optical pulse is used to detect an optical fiber. Then, the first circuit is configured to send a frequency shift signal to the frequency shift unit based on the first signal, and the second circuit is configured to send a modulation signal to the modulation unit based on the second signal. In this case, the frequency shift unit is further configured to: based on the frequency shift signal, perform a first frequency shift on the optical signal at a high level moment of the target optical pulse, and perform a second frequency shift on the optical signal at a low level moment of the target optical pulse, to obtain a frequency-shifted optical signal. The modulation unit is configured to modulate the frequency-shifted optical signal based on the modulation signal to obtain the target optical pulse. In this way, optical pulse output with an ultra-high ER and an ultra-small pulse width is implemented, and frequency shift modulation of the optical pulse signal is flexible and controllable. A value of a frequency can be modulated, a phase can be controlled, a single/double sideband can be implemented, and different modulation formats can be generated.

To better understand embodiments of this application, the following first describes, in detail with reference to the accompanying drawings, an optical pulse generation apparatus provided in embodiments of this application. A person of ordinary skill in the art may learn that, with development of technologies and emergence of new scenarios, the technical solutions provided in embodiments of this application are also applicable to a similar technical problem. For details, refer to FIG. 2. FIG. 2 is a diagram of a structure of an optical pulse generation apparatus according to an embodiment of this application. An optical pulse generation apparatus 200 specifically includes:
a frequency shift unit 204, a modulation unit 205, a first circuit 202, a second circuit 203, and a main control unit 201.

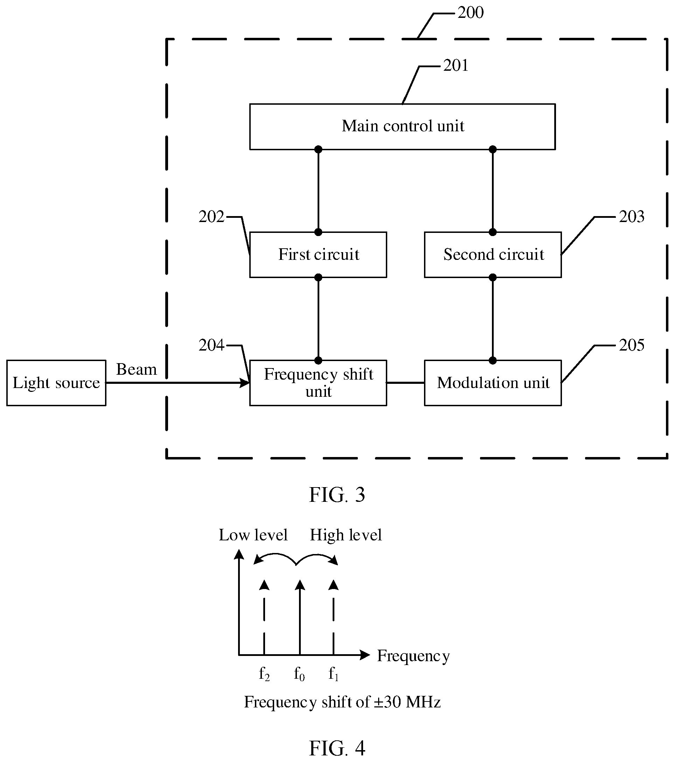

The frequency shift unit 204 is configured to receive an optical signal of a beam transmitted by a light source. For example, refer to an example in FIG. 3. FIG. 3 is a diagram of receiving a beam transmitted by a light source according to an embodiment of this application.

Then, the main control unit 201 is configured to respectively send a first signal and a second signal to the first circuit 202 and the second circuit 203, where the first signal indicates to perform a frequency shift on the received optical signal, the second signal indicates to generate a target optical pulse, and the target optical pulse is used to detect an optical fiber. The first circuit 202 is configured to send a frequency shift signal to the frequency shift unit 204 based on the first signal. The second circuit 203 is configured to send a modulation signal to the modulation unit 205 based on the second signal. Based on the frequency shift signal, the frequency shift unit 204 performs a first frequency shift on the optical signal at a high level moment of the target optical pulse, and performs a second frequency shift on the optical signal at a low level moment of the target optical pulse, to obtain a frequency-shifted optical signal. The modulation unit 205 modulates the frequency-shifted optical signal based on the modulation signal to obtain the target optical pulse.

Specifically, the frequency shift unit 204 and the modulation unit 205 respectively implement frequency shift modulation and pulse modulation. The frequency shift unit 204 can implement flexible frequency modulation, including flexible frequency and phase modulation, and can implement a single/double sideband and different modulation formats. Furthermore, the first frequency shift and the second frequency shift are respectively performed on the optical signal at the high level moment and the low level moment of the target optical pulse to implement frequency shift modulation of different frequencies, thereby improving an in-band equivalent ER. In addition, the modulation unit 205 can implement a high ER and narrow pulse modulation.

It should be noted that the target optical pulse may be determined based on a length of a to-be-detected optical fiber in an actual application scenario and preset in the main control unit 201. For example, a length of a to-be-detected optical fiber in an application environment of the optical pulse generation apparatus is 50 kilometers (km), the first frequency shift is +30 megahertz (MHz), the second frequency shift is -30 MHz, and the target optical pulse is required to be an optical pulse with a repetition frequency of 2 kilohertz (kHz). It may be understood that, this is merely used as an example to illustrate that a parameter for generating the target optical pulse may be preset in the main control unit 201. In an actual case, a specific target optical pulse requirement is determined based on the actual case. This is not specifically limited herein.

Optionally, the main control unit 201 may be implemented by a hardware module such as a processor, a computing unit, an integrated circuit, or an integrated chip, or may be implemented by software. It may be understood that the main control unit 201 may include a hardware structure and/or a software module, and is implemented in a form of the hardware structure, the software module, or the hardware structure and the software module. This is not specifically limited herein.

In the implementation of this application, the optical pulse generation apparatus 200 can implement optical pulse output with an ultra-high ER (for example, ER>70 dB) and an ultra-small pulse width (for example, the small pulse width is 5 nanoseconds), and frequency shift modulation of the optical pulse signal is flexible and controllable. A value of a frequency can be modulated, a phase can be controlled, a single/double sideband can be implemented, and different modulation formats can be generated.

In a possible implementation, the main control unit 201 is further configured to perform timing control on the first circuit and the second circuit. For example, the main control unit 201 uses timing control for the first circuit and the second circuit, to ensure that different frequency shift frequencies are implemented at the high level moment and the low level moment of the target optical pulse, so that optical noise at a low level can be migrated out of a signal frequency band, thereby improving an in-band SNR, and improving an equivalent ER.

In the implementation of this application, an implementation in which different frequency shift frequencies are implemented at the high level moment and the low level moment of the target optical pulse is described, thereby reflecting reliability of the solution.

In a possible implementation, the first frequency shift is different from the second frequency shift. For example, refer to an example in FIG. 4. FIG. 4 is a diagram of modulation of different frequency shift frequencies according to an embodiment of this application. The first frequency shift may be a frequency shift of +30 MHz, in other words, the frequency shift of +30 MHz is implemented on the optical signal. As shown in FIG. 4, the optical signal with a frequency f0 is shifted rightward to a frequency f1 at the high level moment of the target optical pulse. The second frequency shift may be a frequency shift of -30 MHz, in other words, the frequency shift of -30 MHz is implemented on the optical signal. As shown in FIG. 4, the optical signal with the frequency f0 is shifted leftward to a frequency f2 at the low level moment of the target optical pulse. In this way, an in-band equivalent ER is improved, so that an ultra-high ER greater than 70 dB can be implemented to a specific extent.

Optionally, specific frequency shift amounts of the first frequency shift and the second frequency shift may be determined based on an actual environment. If a frequency shift amount is large, a beat signal frequency of a receive end of the target optical pulse is high, and this is applicable to an application scenario in which a bandwidth of the receive end is high. If a frequency shift amount is small, a beat signal frequency of the receive end of the target optical pulse is low, and this is applicable to an application scenario in which a bandwidth of the receive end is low. It may be understood that the specific frequency shift amounts of the first frequency shift and the second frequency shift are not specifically limited herein.

It should be noted that FIG. 4 is merely used as an example to understand this embodiment of this application, and does not constitute a substantive limitation on this application. It may be understood that in an actual case, the first frequency shift and the second frequency shift may alternatively have other frequency shift amounts. This is specifically determined based on the actual case, and this is not specifically limited herein.

In a possible implementation, the modulation signal is a pulse signal with a repetition frequency.

Specifically, the second circuit 203 controls, by using the pulse signal with the repetition frequency, the modulation unit to generate the target optical pulse, in other words, if the modulation signal is the pulse signal with the repetition frequency, the modulation unit generates the target optical pulse with the repetition frequency based on the pulse signal with the repetition frequency. Optionally, the second circuit 203 may flexibly control, by using a pulse width, the repetition frequency, pulse code, or the like, the modulation unit 205 to generate the target optical pulse. In the implementation of this application, the modulation signal is the pulse signal with the repetition frequency, so that an implementation form of the modulation signal is specifically described, thereby improving reliability of the solution.

In a possible implementation, the frequency shift unit is any one of the following: an in-phase/quadrature modulator, an acousto-optic modulator, or an electro-optic modulator. It may be understood that, in an actual case, the frequency shift unit may alternatively be another component or module having the same function. This is not specifically limited herein.

In the implementation of this application, a plurality of types of frequency shift units are listed, thereby increasing selectivity and diversity of the solution.

In a possible implementation, the modulation unit is a semiconductor optical amplifier. It may be understood that, in an actual case, the modulation unit may alternatively be another component or module having the same function. This is not specifically limited herein.

In the implementation of this application, a specific implementation of the modulation unit is listed, thereby reflecting reliability of the solution.

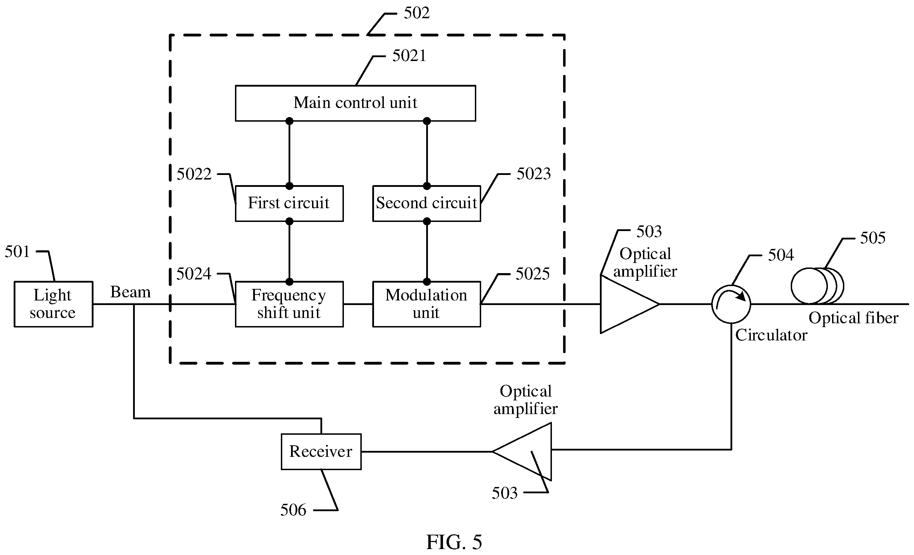

As shown in FIG. 5, this application further provides a detection system. For details, refer to FIG. 5. FIG. 5 is a diagram of a structure of a detection system according to an embodiment of this application. The detection system includes a light source 501, an optical pulse generation apparatus 502, a circulator 504, a receiver 506, and an optical fiber 505. The optical pulse generation apparatus 502 includes a frequency shift unit 5024, a modulation unit 5025, a first circuit 5022, a second circuit 5023, and a main control unit 5021.

The light source 501 is configured to send a beam. The frequency shift unit 5024 is configured to receive an optical signal of the beam. Then, the main control unit 5021 is configured to respectively send a first signal and a second signal to the first circuit 5022 and the second circuit 5023, where the first signal indicates to perform a frequency shift on the received optical signal, the second signal indicates to generate a target optical pulse, and the target optical pulse is used to detect an optical fiber. The first circuit 5022 is configured to send a frequency shift signal to the frequency shift unit 5024 based on the first signal. The second circuit 5023 is configured to send a modulation signal to the modulation unit 5025 based on the second signal. Based on the frequency shift signal, the frequency shift unit 5024 performs a first frequency shift on the optical signal at a high level moment of the target optical pulse, and performs a second frequency shift on the optical signal at a low level moment of the target optical pulse, to obtain a frequency-shifted optical signal. The modulation unit 5025 modulates the frequency-shifted optical signal based on the modulation signal to obtain the target optical pulse. The modulation unit 5025 is further configured to send the target optical pulse to the optical fiber 505 through the circulator 504. The circulator 504 is configured to: obtain backscattered light of the target optical pulse in the optical fiber 505, and send the backscattered light to the receiver 506. Then, the receiver 506 performs distributed detection based on the backscattered light.

Specifically, the receiver 506 performs coherent reception and phase retrieval on the backscattered light, to implement dynamic strain signal detection on the optical fiber, and specifically implement, for example, sound wave detection or vibration detection. It may be understood that, in another application scenario, stress detection or other strain signal detection may alternatively be implemented. This is not specifically limited herein.

It should be noted that specific descriptions of the optical pulse generation apparatus 502 are the same as those of the foregoing optical pulse apparatus 200 in FIG. 2. Details are not described herein again.

In a possible implementation, the detection system further includes at least one optical amplifier 503, configured to transmit the target optical pulse or the backscattered light. For example, as shown in FIG. 5, the detection system further includes two optical amplifiers. One optical amplifier is configured to input the target optical pulse to the optical fiber 505, and one optical amplifier is configured to input the backscattered light to the receiver 506, to amplify the signal.

In the implementation of this application, the detection system can increase detection sensitivity based on the optical pulse generation apparatus, so that a weaker signal can be detected. In addition, the detection system can meet optical pulse output requirements in different aspects such as ER, pulse width, and frequency shift flexibility, thereby further improving detection sensitivity.

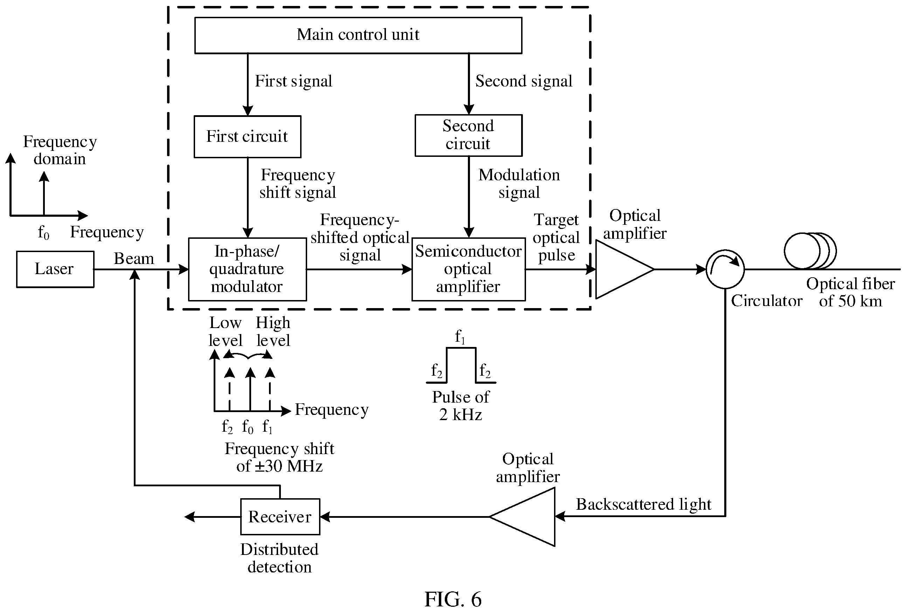

The following provides an application scenario example to describe an actual application of this application. For details, refer to FIG. 6. FIG. 6 is a diagram of an architecture of high-sensitivity distributed optical fiber strain detection according to an embodiment of this application.

A laser is used as a light source. The laser is a high-coherence laser with a line width of 2 kHz, and sends a single-frequency beam to an optical pulse generation apparatus. An optical signal frequency of the beam is f0. The optical pulse generation apparatus uses an in-phase/quadrature modulator as a frequency shift unit, and uses a semiconductor optical amplifier as a modulation unit. A main control unit generates a frequency shift signal through a first circuit. The frequency shift signal herein may be a radio frequency drive signal, used to drive the in-phase/quadrature modulator to perform a frequency shift on the optical signal output by the laser. A frequency shift amount and a frequency shift modulation format may be flexibly determined, and are not limited.

In addition, the main control unit uses timing control for the first circuit and a second circuit. In this case, at a high level moment of a target optical pulse, the frequency shift signal sent by the first circuit drives the in-phase/quadrature modulator to implement a frequency shift of +30 MHz on the optical signal output by the laser. As shown in FIG. 6, the optical signal with the frequency f0 is shifted to a frequency f1. At a low level moment of the target optical pulse, the frequency shift signal of the first circuit drives the in-phase/quadrature modulator to implement a frequency shift of -30 MHz on the optical signal output by the laser. As shown in FIG. 6, the optical signal with the frequency f0 is shifted to a frequency f2. In this way, optical noise at the high and low level moments is migrated out of a signal frequency band, thereby improving an in-band signal-to-noise ratio, and improving an equivalent ER of the pulse.

In addition, because a to-be-detected optical fiber is an optical fiber of 50 km, the main control unit generates a modulation signal through the second circuit, where the modulation signal is a pulse signal with a repetition frequency of 2 kHz; and drives, based on the pulse signal with the repetition frequency of 2 kHz, the semiconductor optical amplifier to generate a target optical pulse with the repetition frequency of 2 kHz, for example, a pulse of 2 kHz shown in FIG. 6.

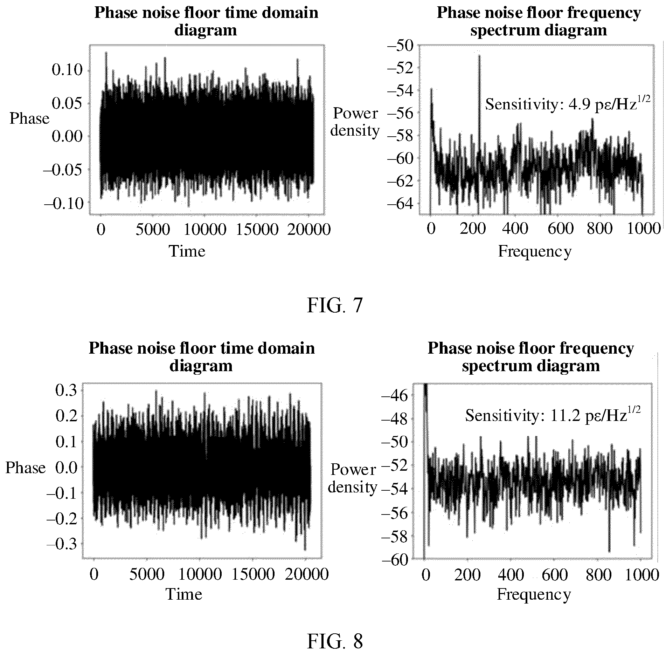

In addition, a receiver performs coherent reception and phase retrieval on backscattered light that is generated in the optical fiber and that is sent by the circulator, to implement distributed detection on an optical fiber strain signal. A detection result is shown in FIG. 7 and FIG. 8. FIG. 7 is a diagram of a result of high-sensitivity distributed optical fiber strain detection according to an embodiment of this application. FIG. 8 is another diagram of a result of high-sensitivity distributed optical fiber strain detection according to an embodiment of this application. FIG. 7 shows a phase noise floor signal recovered at a front end of the optical fiber, including a time domain waveform and a frequency spectrum of noise floor. Phase noise power of a measured signal, namely, the backscattered light, may be obtained based on the frequency spectrum, and it can be learned, based on a standard length of a system, that strain detection sensitivity of about 4.9 pε/Hz^{1/2} can be implemented at the front end of the optical fiber. FIG. 8 shows a phase noise floor signal recovered at a rear end of the optical fiber, including a time domain waveform and a frequency spectrum of noise floor. It can be learned, by using the same method as that in FIG. 7, that strain detection sensitivity of about 11.2 pε/Hz^{1/2} can be implemented at the rear end of the optical fiber. The noise is lower than noise in a current actual application environment, thereby improving test sensitivity, so that a weaker signal can be detected.

The application scenario example provided in embodiments of this application reflects that the optical pulse generation apparatus can meet optical pulse output requirements in different aspects such as ER, pulse width, and frequency shift flexibility, and can reduce test noise of a detection system and improve sensitivity of the detection system.

The foregoing describes in detail the optical pulse generation apparatus and the detection system provided in embodiments of this application. This specification describes the principles and the implementations of this application by using specific examples. The descriptions of the foregoing embodiments are merely used to help understand this application. In addition, a person of ordinary skill in the art can make modifications to the specific implementations and the application scope based on the ideas of this application. In conclusion, the content of this specification shall not be construed as a limitation on this application.

In addition, it should be noted that the apparatus embodiments described above are merely examples. The units described as separate parts may or may not be physically separate, and parts displayed as units may or may not be physical units, to be specific, may be located at one place, or may be distributed on a plurality of network units. Some or all of the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software and necessary universal hardware, or may be certainly implemented by dedicated hardware, including an application-specific integrated circuit, a dedicated CPU, a dedicated memory, a dedicated component, or the like. Generally, any function completed by a computer program can be easily implemented by corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

## Claims

1. An optical pulse generation apparatus, wherein the optical pulse generation apparatus comprises a frequency shift unit, a modulation unit, a first circuit, a second circuit, and a main control unit, wherein
the frequency shift unit is configured to receive an optical signal of a beam transmitted by a light source;
the main control unit is configured to respectively send a first signal and a second signal to the first circuit and the second circuit, wherein the first signal indicates to perform a frequency shift on the optical signal, the second signal indicates to generate a target optical pulse, and the target optical pulse is used to detect an optical fiber;
the first circuit is configured to send a frequency shift signal to the frequency shift unit based on the first signal;
the second circuit is configured to send a modulation signal to the modulation unit based on the second signal;
the frequency shift unit is further configured to: based on the frequency shift signal, perform a first frequency shift on the optical signal at a high level moment of the target optical pulse, and perform a second frequency shift on the optical signal at a low level moment of the target optical pulse, to obtain a frequency-shifted optical signal; and
the modulation unit is configured to modulate the frequency-shifted optical signal based on the modulation signal to obtain the target optical pulse.

2. The apparatus according to claim 1, wherein the main control unit is further configured to perform timing control on the first circuit and the second circuit.

3. The apparatus according to claim 1 or 2, wherein the first frequency shift is different from the second frequency shift.

4. The apparatus according to any one of claims 1 to 3, wherein the modulation signal is a pulse signal with a repetition frequency.

5. The apparatus according to any one of claims 1 to 4, wherein the frequency shift unit is any one of the following:
an in-phase/quadrature modulator, an acousto-optic modulator, or an electro-optic modulator.

6. The apparatus according to any one of claims 1 to 5, wherein the modulation unit is a semiconductor optical amplifier.

7. A detection system, wherein the detection system comprises a light source, an optical pulse generation apparatus, a circulator, a receiver, and an optical fiber, and the optical pulse generation apparatus comprises a frequency shift unit, a modulation unit, a first circuit, a second circuit, and a main control unit;
the light source is configured to send a beam;
the frequency shift unit is configured to receive an optical signal of the beam transmitted by the light source;
the main control unit is configured to respectively send a first signal and a second signal to the first circuit and the second circuit, wherein the first signal indicates to perform a frequency shift on the optical signal, the second signal indicates to generate a target optical pulse, and the target optical pulse is used to detect an optical fiber;
the first circuit is configured to send a frequency shift signal to the frequency shift unit based on the first signal;
the second circuit is configured to send a modulation signal to the modulation unit based on the second signal;
the frequency shift unit is further configured to: based on the frequency shift signal, perform a first frequency shift on the optical signal at a high level moment of the target optical pulse, and perform a second frequency shift on the optical signal at a low level moment of the target optical pulse, to obtain a frequency-shifted optical signal;
the modulation unit is configured to modulate the frequency-shifted optical signal based on the modulation signal to obtain the target optical pulse;
the modulation unit is further configured to send the target optical pulse to the optical fiber through the circulator;
the circulator is configured to: obtain backscattered light of the target optical pulse in the optical fiber, and send the backscattered light to the receiver; and
the receiver performs distributed detection based on the backscattered light.

8. The system according to claim 7, wherein the main control unit is further configured to perform timing control on the first circuit and the second circuit.

9. The system according to claim 7 or 8, wherein the detection system further comprises at least one optical amplifier, and the optical amplifier is configured to transmit the target optical pulse or the backscattered light.

10. The system according to any one of claims 7 to 9, wherein the first frequency shift is different from the second frequency shift.

11. The system according to any one of claims 7 to 10, wherein the modulation signal is a pulse signal with a repetition frequency.

12. The system according to any one of claims 7 to 11, wherein the frequency shift unit is any one of the following:
an in-phase/quadrature modulator, an acousto-optic modulator, or an electro-optic modulator.

13. The system according to any one of claims 7 to 12, wherein the modulation unit is a semiconductor optical amplifier.
